# EUROPÄISCHE PATENTSCHRIFT

(11) **EP 3 507 091 B1**
(45) Veröffentlichungstag und Bekanntmachung des Hinweises auf die Patenterteilung: **02.08.2023**
(21) Anmeldenummer: 17743029.5
(22) Anmeldetag: 25.07.2017
(51) Int. Cl.: B32B 17/10

(54) **VERBUNDSCHEIBE FÜR EIN HEAD-UP-DISPLAY**
COMPOSITE PANE FOR A HEAD-UP DISPLAY
VITRAGE FEUILLETÉ POUR AFFICHAGE TÊTE HAUTE

(30) Priorität: 01.09.2016 EP 16186822
(43) Veröffentlichungstag der Anmeldung: 10.07.2019
(73) Patentinhaber: SAINT-GOBAIN GLASS FRANCE, 92400 Courbevoie (FR)
(72) Erfinder: MANZ, Florian, 52064 Aachen (DE); VAN DER MEULEN, Uwe, 52385 Nideggen (DE); SCHULZ, Valentin, 52382 Niederzier (DE)
(74) Vertreter: Gebauer, Dieter Edmund
(86) Internationale Anmeldenummer: PCT/EP2017/068708
(87) Internationale Veröffentlichungsnummer: WO 2018/041472

(56) Entgegenhaltungen:
- EP-A1- 3 246 157
- EP-A1- 3 484 705
- WO-A1-02/26492
- WO-A1-2014/174310
- DE-A1-102012 219 950
- DE-C1- 19 622 566
- US-A1- 2002 172 804

## Beschreibung

Die Erfindung betrifft eine Verbundscheibe für ein Head-Up-Display, ein Verfahren zur Herstellung der Verbundscheibe und deren Verwendung.

Fahrzeuge, insbesondere Personenkraftwagen (PKW), werden immer häufiger mit sogenannten Head-Up-Displays (HUDs) ausgestattet. Head-Up-Displays sind zur Darstellung von Bildinformationen für einen Betrachter bzw. Fahrer vorgesehen. Mit einem Projektor als Bildgeber, beispielsweise im Bereich des Armaturenbretts oder im Dachbereich, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen.

Üblicherweise bestehen Windschutzscheiben aus zwei Glasscheiben, welche über eine thermoplastische Folie miteinander laminiert sind. Sollen die Oberflächen der Glasscheiben in einem Winkel angeordnet werden, so ist es üblich, eine thermoplastische Folie mit nichtkonstanter Dicke zu verwenden. Man spricht auch von einer keilförmigen Folie oder Keilfolie. Der Winkel zwischen den beiden Oberflächen der Folie wird als Keilwinkel bezeichnet. Der Keilwinkel kann über die gesamte Folie konstant sein (lineare Dickenänderung) oder sich positionsabhängig ändern (nichtlineare Dickenänderung).

Bei dem vorstehend beschriebenen Head-Up-Display tritt das Problem auf, dass das Projektorbild an beiden Oberflächen der Windschutzscheibe reflektiert wird. Dadurch nimmt der Fahrer nicht nur das gewünschte Hauptbild wahr, welches durch die Reflexion an der innenraumseitigen Oberfläche der Windschutzscheibe hervorgerufen wird (Primärreflexion). Der Fahrer nimmt auch ein leicht versetztes, in der Regel intensitätsschwächeres Nebenbild wahr, welches durch die Reflexion an der außenseitigen Oberfläche der Windschutzscheibe hervorgerufen wird (Sekundärreflexion). Dieses Problem wird gemeinhin dadurch gelöst, dass die reflektierenden Oberflächen mit einem bewusst gewählten Winkel zueinander angeordnet werden, so dass Hauptbild und Nebenbild (Geisterbild) überlagert werden, wodurch das Nebenbild (Geisterbild) nicht mehr störend auffällt.

Es ist auch bekannt, Windschutzscheiben mit transparenten, elektrisch leitfähigen Beschichtungen zu versehen. Diese Beschichtungen können als IR-reflektierende Beschichtungen wirken, um die Erwärmung des Fahrzeuginnenraums zu verringern und dadurch den thermischen Komfort zu verbessern. Die Beschichtungen können aber auch als beheizbare Beschichtungen verwendet werden, indem sie mit einer Spannungsquelle verbunden werden, so dass ein Strom durch die Beschichtung fließt. Geeignete Beschichtungen enthalten leitfähige, metallische Schichten auf Basis von Silber.

Windschutzscheiben mit leitfähigen Beschichtungen im Inneren des Verbundglases weisen im Zusammenhang mit Head-Up-Displays das Problem auf, dass durch die leitfähige Beschichtung eine weitere reflektierende Grenzfläche für das Projektorbild gebildet wird. Dies führt zu einem weiteren unerwünschten Nebenbild, welches auch als Schichtreflexion oder Schicht-"Ghost" bezeichnet wird.

Die deutsche Patentanmeldung DE 10 2014 005 977 A1 offenbart eine HUD-Projektionsanordnung mit einer beschichteten Windschutzscheibe. Zur Vermeidung von Störbildern wird vorgeschlagen, bei einem virtuellen Bild die infrarot-nahen Lichtanteile aus den bildgebenden Lichtstrahlen heraus zu filtern. Diese Lösung hat allerdings den Nachteil, dass der Projektor zusätzliche Infrarotabsorptionselemente im Strahlengang aufweisen muss.

Eine laminierte Scheibenanordnung ist aus der DE 10 2012 219 950 A1 bekannt. Darin gezeigt ist eine äußere Glasplatte, die eine Außenfläche und eine gegenüberliegende erste Laminatfläche definiert, eine innere Glasplatte, die eine Innenfläche und eine gegenüberliegende zweiten Laminatfläche definiert, eine erste Polyvinylbutyral (PVB)-Schicht, die benachbart zu der ersten Laminatfläche angeordnet ist; eine zweite PVB-Schicht, die benachbart zu der zweiten Laminatfläche angeordnet ist, und eine Polyethylenterephthalat (PET)-Schicht, die zwischen der ersten PVB-Schicht und der zweiten PVB-Schicht angeordnet ist.

Die Außenkante der PET-Schicht und die Außenkanten der PVB-Schichten bilden eine gemeinsame Außenkante, so dass die Kante der PET-Schicht nicht gegen die Umgebung abgeschirmt ist. Trägt die PET-Schicht Funktionsschichten, beispielsweise eine elektrisch leitfähige Beschichtung, so sind diese häufig korrosionsanfällig, was die laminierte Scheibenanordnung in ihrer Funktion stark beeinträchtigt. Außerdem zeigen solche PVB-PET-PVB-Schichtanordnungen häufig eine starke Orangenhaut und Innenfehler. Als Orangenhaut bezeichnet der Fachmann in diesem Zusammenhang eine unerwünscht hohe Oberflächenrauigkeit der Schichtanordnung, die auch im fertigen Endprodukt sichtbar ist und allgemein als störend empfunden wird. Unter dem Begriff "Innenfehler" versteht der Fachmann die verschiedensten weiteren im Laminat auftretenden optisch störenden Fehlstellen und Fremdkörpereinschlüsse.

Eine derartige Orangenhaut macht sich bei der Verwendung der Scheibenanordnung als Projektionsfläche für ein Head-Up-Displays (HUD) bemerkbar. Im Zusammenhang mit HUDs tritt das Problem auf, dass die Orangenhaut die Qualität des virtuellen Bildes stark beeinflusst. Das virtuelle Bild ist für den Betrachter nicht mehr als ein scharfes Bild erkennbar. Vielmehr wird das virtuelle Bild durch eine wellenförmige Reflexion der elektrisch leitfähigen Beschichtung verzerrt und nahezu unkenntlich dargestellt.

US 2002/172804 A1 offenbart eine Verbundscheibe mit zwei keilförmigen thermoplastischen Folien, von denen ein dicker als die andere ist. DE 19622566 C1 offenbart einen Rückschnitt einer thermoplastischen Folie gegenüber einer anderen thermoplastischen Folie. Die nachveröffentlichte europäische Patentanmeldung EP 3246157 A1 zeigt eine Verbundscheibe mit zwei Polyacetal-Folien und einer Polymerzwischenschicht.

Der Erfindung liegt die Aufgabe zugrunde, eine Verbundscheibe für ein Head-Up-Display bereitzustellen, welche eine durch die Oberflächenrauigkeit der Schichtanordnung hervorgerufene Störwirkung möglichst minimiert.

Die Aufgabe der vorliegenden Erfindung wird erfindungsgemäß durch eine Verbundscheibe für Head-Up-Display gemäß Anspruch 1 gelöst. Bevorzugte Ausführungen gehen aus den Unteransprüchen hervor.

Die erfindungsgemäße Verbundscheibe für ein Head-Up-Display umfasst mindestens eine erste Scheibe und eine zweite Scheibe, die über eine Verbundschicht mit einander verbunden sind, sowie eine transparente, elektrisch leitfähige Beschichtung, wobei die Verbundschicht eine erste thermoplastische Folie, eine Polyesterfolie und eine zweite thermoplastische Folie mit einem Verhältnis der Dicken der zweiten thermoplastischen Folie zur ersten thermoplastischen Folie von 1,5:1 bis 20:1 aufweist.

Mit anderen Worten wird eine Verbundscheibe für ein Head-Up-Display bereitgestellt, welche sowohl zwei Scheiben mit einer Verbundschicht als auch die transparente, elektrisch leitfähige Beschichtung aufweist. Bei der erfindungsgemäßen Verbundscheibe, bei welcher das vom Head-Up-Display erzeugte virtuelle Bild besonders scharf dargestellt wird, weist die erste thermoplastische Folie eine Dicke auf die wesentlich geringer ist als die Dicke der zweiten thermoplastischen Folie. Die erste thermoplastische Folie kann halb so dick wie die zweite thermoplastische Folie sein. Dabei kann die Dicke der ersten thermoplastischen Folie nur ein Zehntel der Dicke der zweiten thermoplastischen Folie betragen. Dies hat den Vorteil, dass somit der Abstand zwischen der ersten Scheibe und der Polyesterfolie stark reduziert wird. Dadurch wird das virtuelle Bild des Head-Up-Displays schärfer dargestellt und gewinnt qualitativ an Eindruck.

Erfindungsgemäß weisen die erste thermoplastische Folie und die Polyesterfolie eine gemeinsame Kante auf, die zumindest teilweise im Abstand zu einem Rand der zweiten thermoplastischen Folie beabstandet ist. Insbesondere kann die gemeinsame Kante parallel oder im wesentlichem parallel zum Rand der zweiten thermoplastischen Folie verlaufen. Ein solcher Abstand vermeidet einen direkten Kontakt der Polyesterfolie mit der äußeren Umgebung der Verbundscheibe.

Der Abstand A kann breit variieren und daher den Erfordernissen des Einzelfalls hervorragend angepasst werden. Vorzugsweise liegt der Abstand A zwischen 1 mm und 400 mm, besonders bevorzugt 5 mm bis 250 mm.

Zusätzlich füllt die zweite thermoplastische Folie den Raum zwischen der Kante, einer Innenseite der ersten Scheibe und dem im Abstand A zu befindlichen Rand der zweiten thermoplastischen Folie aus und ist mit dem Material der ersten thermoplastischen Folie verschmolzen, so dass die Kante von der Umgebung der Verbundscheibe nahezu vollständig isoliert ist. Durch die Isolierung der Kante von der äußeren Umgebung der Verbundscheibe können die im Produktionsprozess auftretenden Innenfehler sowie eine nach Lamination optisch erkennbare Oberflächenrauigkeit ("Orangenhaut") minimiert werden.

Die zweite thermoplastische Folie weist einen Keilwinkel auf. Der Keilwinkel (α) kann von 0,2 mrad bis 1 mrad betragen, bevorzugt von 0,3 mrad bis 0,7 mrad, besonders bevorzugt von 0,4 mrad bis 0,5 mrad. Durch den Keilwinkel wird die Form der Verbundscheibe derart verändert, dass störende Reflexionen an der zweiten Scheibe weitestgehend kompensiert werden können.

Die zweite thermoplastische Folie kann Eigenschaften zu einer verstärkten Absorption von Infrarot- und / oder Ultraviolettstrahlung aufweisen. Sie kann auch schalldämpfend ausgebildet sein.

Die Dicken der thermoplastischen Folien und der Polyesterfolie können breit variieren und daher hervorragend den Erfordernissen des Einzelfalls angepasst werden. Erfindungsgemäß ist die erste thermoplastische Folie 40 µm bis 110 µm, insbesondere 40 µm bis 60 µm oder 90 µm bis 110 µm dick. Vorzugsweise ist die Polyesterfolie 10 µm bis 130 µm, bevorzugt 20 µm bis 60 µm, insbesondere 40 µm bis 60 µm dick. Vorzugsweise ist die zweite thermoplastische Folie 150 µm bis 1000 µm, bevorzugt 350 µm bis 850 µm und insbesondere 370 µm bis 510 µm oder 750 µm bis 845 µm dick.

Es hat sich überraschend gezeigt, dass mittels einer Dickenänderung der ersten thermoplastischen Folie, insbesondere Reduzierung, das vom Head-Up-Display generierte virtuelle Bild einstellbar oder veränderbar ist. Bei einer Dicke der ersten thermoplastischen Schicht von 40 µm bis 110 µm, insbesondere ca. 50 µm, wird der sichtbare Abstand der durch eine Beschichtung generierten Reflexion und den virtuellen Bild erheblich reduziert. Somit überlappt die unerwünschte Reflexion das virtuelle Bild und verbessert auf diese Weise seine Qualität.

Die Polyesterfolie der erfindungsgemäßen Verbundscheibe weist zumindest teilweise an einer Oberfläche die transparente, elektrisch leitfähige Beschichtung auf. Vorzugsweise ist die transparente, elektrisch leitfähige Beschichtung mittels einer physikalischen Gasphasenabscheidung auf der Polyesterfolie aufgebracht. Die transparente, elektrisch leitfähige Beschichtung ist zwischen der mindestens einen ersten thermoplastischen Folie und der Polyesterfolie und / oder zwischen der Polyesterfolie und der zweiten thermoplastischen Folie angeordnet. Vorzugsweise ist die transparente, elektrisch leitfähige Beschichtung hin zur ersten dünnen thermoplastischen Folie, insbesondere einer PVB-Folie, gerichtet, um einen Schichtübertrag beim Rückschnitt zu vermeiden. Die transparente, elektrisch leitfähige Beschichtung weist eine starke Absorption im infraroten Bereich des Lichtspektrums auf und verhindert dadurch eine Aufheizung des dahinter liegenden Innenraums. Alternativ oder zusätzlich kann die elektrisch leitfähige Beschichtung zum Beheizen der Verbundscheibe, zur Reflexion von Wärmestrahlung und / oder zum Senden und Empfangen von Funkstrahlung vorgesehen sein.

Vorzugsweise ist die Polyesterfolie eine Polyethylenterephthalatfolie (PET) oder Polybutylenterephthalatfolie, bevorzugt aber eine Polyethylenterephthalatfolie.

Die erste thermoplastische Folie und / oder die zweite thermoplastische Folie kann ein Kunststoff aufweisen, ausgewählt aus der Gruppe, bestehend aus Polyvinylbutyral (PVB), Ethylenvinylacetat (EVA), Polyurethan (PU), Polypropylen (PP), Polyacrylat, Polyethylen (PE), Polycarbonat (PC), Polymethylmethacrylat (PMMA), Polyvinylchlorid (PVC), Polyacetatharz, Gießharzen, Polyacrylaten, fluorierten Ethylen-Propylen-Copolymerisaten, Polyvinylfluorid und / oder Ethylen-Tetrafluorethylen-Copolymerisaten.

Besonders bevorzugt wird PVB verwendet. Insbesondere durch die geringe Dicke kann die erste thermoplastische Folie frei oder im Wesentlichen frei von Weichmachern ausgeführt werden.

»Im Wesentlichen« bedeutet hier und im Folgenden, dass die betreffende Eigenschaft oder der betreffende Wert von dem exakten Wert oder der Eigenschaft abweichen kann, aber nur in einem Maße, dass die betreffende Funktion, die durch den Wert oder die Eigenschaft definiert wird, nicht gestört oder geschädigt wird.

Die erste und / oder die zweite thermoplastische Folie können gefärbt sein, wobei die Farbe und Helligkeit in weiten Grenzen frei gewählt werden können. Die zweite thermoplastische Folie kann UV-Strahlung und / oder IR-Strahlung absorbierend ausgebildet sein. Zwischen der zweiten thermoplastischen Folie und der zweiten Scheibe können weitere Folien zum Einsatz kommen, wie zum Beispiel schaltbare Elemente auf der Basis von Flüssigkristallen, suspendierten Partikeln oder elektrochrome Schichtaufbauten.

Die erfindungsgemäße Verbundscheibe weist einen kapazitiven Schaltbereich auf, wobei der kapazitive Schaltbereich durch mindestens eine beschichtungsfreie Trennlinie aus der transparenten, elektrisch leitfähigen Beschichtung abgetrennt ist. Der kapazitive Schaltbereich ist über einen Anschlussbereich mit einer Sensorelektronik verbunden. Die Sensorelektronik ist eine kapazitive Sensorelektronik. Der kapazitive Schaltbereich ist in die erfindungsgemäße Verbundscheibe integriert. Das ist besonders vorteilhaft im Hinblick auf eine dünne Bauweise der Fensterscheibe sowie einer nur geringen Störung der Durchsicht durch die Verbundscheibe.

Die erfindungsgemäße Verbundscheibe ist bevorzugt transparent, wobei die Transmission der Scheibe im sichtbaren Spektralbereich bei größer als 0 % liegt. Für Scheiben im Durchsichtbereich einer Fahrzeugverglasung gelten gesetzliche Mindestanforderungen an die Transmission im sichtbaren Spektralbereich. Bei Windschutzscheiben ist hier beispielsweise eine Transmission von mindestens 70 % in den Vorschriften ECE-R43, ANSI Z 26.1 und CCC /CNCA-04 vorgeschrieben. Eine bevorzugte Ausführungsform der Erfindung ist eine Windschutzscheibe entsprechend dieser Anforderung.

Die erste Scheibe und / oder die zweite Scheibe ist oder sind aus einem Material aufgebaut, das aus Glas und / oder mindestens einem Kunststoff, insbesondere einem klaren, starren Kunststoff aufgebaut ist oder hieraus besteht.

Vorzugsweise wird das Glas aus der Gruppe, bestehend aus Flachglas, Floatglas, Quarzglas, Borosilikatglas und Kalk-Natron-Glas, ausgewählt.

Vorzugsweise wird der klare, starre Kunststoff aus der Gruppe, bestehend aus Polyethylen, Polypropylen, Polycarbonat, Polymethylmethacrylat, Polystyrol, Polyamid, ausgewählt.

Die Dicke der ersten Scheibe und / oder der zweiten Scheibe kann breit variieren und so hervorragend den Erfordernissen des Einzelfalls angepasst werden. Vorzugsweise werden Scheiben mit den Standardstärken von 0,3 mm bis 25 mm, bevorzugt von 1,2 mm bis 3,5 mm für Fahrzeugglas verwendet.

Die Größe der ersten Scheibe und / oder der zweiten Scheibe kann ebenfalls breit variieren und richtet sich nach der Größe der erfindungsgemäßen Verbundscheibe. Beispielsweise können sie die im Fahrzeugbau üblichen Flächen von 200 cm² bis zu 20 m² aufweisen.

Die erste Scheibe und die zweite Scheibe können einen beliebigen Umriss haben. So können sie dreieckig, viereckig, rautenförmig, trapezförmig fünfeckig oder sechseckig gegebenenfalls mit abgerundeten Ecken, rund, oval, elliptisch oder nierenförmig gegebenenfalls mit abgerundeten Kanten sein.

Die erste Scheibe und / oder die zweite Scheibe können eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt sind die Scheiben planar oder leicht oder stark in einer Richtung oder in mehreren Richtungen des Raumes gebogen. Insbesondere werden planare oder im Wesentlichen planare Scheiben verwendet. Die Scheiben können farblos oder gefärbt sein und / oder IR- und / oder UV-Strahlung absorbierende Pigmente enthalten. Beim Einsatz von PET kann eine TSA Außenscheibe zu einer TTS Erhöhung (Verschlechterung) führen (vgl. DIN EN ISO 13837 Wärme).

Die Erfindung betrifft weiterhin ein Verfahren zur Herstellung einer Verbundscheibe, das die folgenden Verfahrensschritte umfasst:
(a) Bereitstellen mindestens einer Scheibe mit einer Oberseite,
(b) Bedecken der Oberseite mit einer thermoplastischen Folie bis zum Randbereich der Scheibe,
(c) vollständiges Bedecken der der Oberseite gegenüberliegenden Oberfläche der thermoplastischen Folie mit mindestens einer Polyesterfolie,
(d) vollständiges Bedecken der freien Oberfläche der Polyesterfolie mit mindestens einer weiteren thermoplastischen Folie,
(e) vertikales Einschneiden der Polyesterfolie und der weiteren thermoplastischen Folie mit einer Schneidevorrichtung im Abstand zum Rand der thermoplastischen Folien,
(f) Entfernen eines Folienstreifens, so dass die weitere thermoplastische Folien und die Polyesterfolie eine gemeinsame Kante bilden und eine freie horizontale Oberfläche der thermoplastischen Folie freigelegt wird, und
(g) Aufpressen einer weiteren Scheibe mit einem Druck, wobei eine Innenseite der weiteren Scheibe mit der Oberseite der weiteren thermoplastischen Folie in Kontakt kommt und wobei ein freier Raum zwischen der Kante, der Innenseite und der Oberfläche durch Einfließen eines Materials von mindestens einer der thermoplastischen Folien aufgefüllt wird.

Das Einschneiden der ersten thermoplastischen Folie und der Polyesterfolie in Schritt (e) erfolgt vorzugsweise senkrecht zur Oberfläche der ersten thermoplastischen Folie.

In einer bevorzugten Ausführungsform erfolgt das Aufpressen (g) bei höheren Temperaturen und unter Vakuum. Geeignete Vorrichtungen hierfür, wie z.B. Vakuumsäcke, sind üblich und bekannt und brauchen hier nicht näher erläutert zu werden. Bevorzugt erfolgt die Lamination im Autoklavverfahren.

Das erfindungsgemäße Verfahren wies die Nachteile des Standes der Technik nicht mehr auf, sondern lieferte überraschend in sehr gut reproduzierbarer Weise erfindungsgemäße Verbundscheiben, die die sog. "Orangenhaut" kaum oder gar nicht aufwiesen.

Die erfindungsgemäße Verbundscheibe, insbesondere die mithilfe des erfindungsgemäßen Verfahrens hergestellte erfindungsgemäße Verbundscheibe, kann hervorragend als bewegliches und unbewegliches funktionales und / oder dekoratives Einzelstück und / oder als Einbauteil in Möbeln, Geräten und Gebäuden sowie in Fortbewegungsmitteln zur Fortbewegung auf dem Lande, in der Luft oder zu Wasser, wie Flugzeuge, Schiffe, Züge und Kraftfahrzeuge, insbesondere aber in Kraftfahrzeugen, beispielsweise als Windschutzscheibe, Heckscheibe und Seitenscheibe und / oder Glasdach, insbesondere aber als Dachverglasung, verwendet werden.

Es versteht sich, dass die vorstehend genannten und nachstehend näher erläuterten Merkmale nicht nur in den angegebenen Kombinationen und Konfigurationen, sondern auch in anderen Kombinationen und Konfigurationen oder in Alleinstellung einsetzbar sind, ohne den Rahmen der vorliegenden Erfindung zu verlassen.

Die Erfindung umfasst außerdem die Verwendung einer erfindungsgemäßen Verbundscheibe in einem Kraftfahrzeug, bevorzugt einem Personenkraftwagen als Windschutzscheibe, die als Projektionsfläche eines Head-Up-Displays dient.

Im Folgenden wird die Erfindung anhand von Ausführungsbeispielen näher erläutert. Die Figuren sind schematische Darstellungen und nicht maßstabsgetreu. Die Figuren schränken die Erfindung in keiner Weise ein.

Es zeigen:
- Fig. 1: eine Verbundscheibe als Bestandteil eines Head-Up-Displays,
- Fig. 2: einen vertikalen Längsschnitt durch einen Randbereich der Verbundscheibe,
- Fig. 3: einen vertikalen Längsschnitt durch den Randbereich einer Zwischenstufe 1a bei der Herstellung der Verbundscheibe,
- Fig. 4: einen vertikalen Längsschnitt durch den Randbereich der Zwischenstufe 1b bei der Herstellung der Verbundscheibe,
- Fig. 5: eine Draufsicht auf die Zwischenstufe 1b der Verbundscheibe und
- Fig. 6: einen vertikalen Längsschnitt durch den Randbereich der Verbundscheibe bei einer Zwischenstufe 1c.

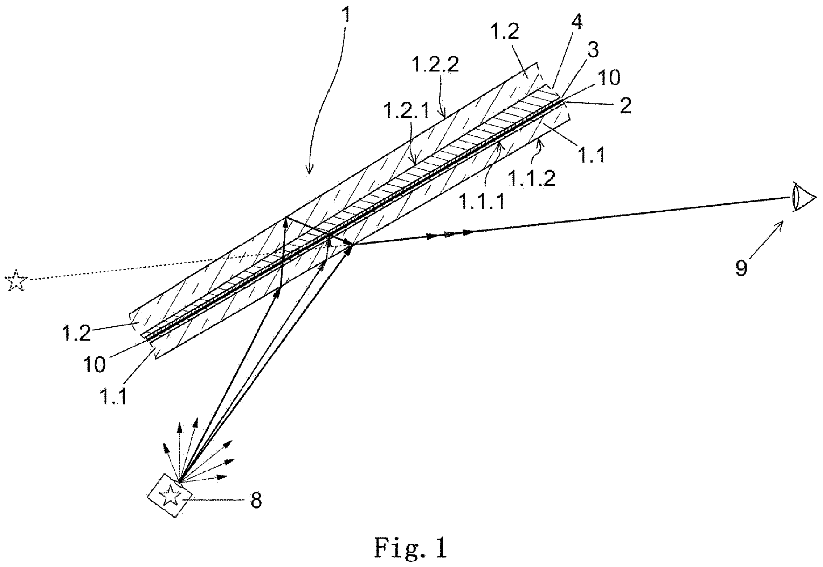

Fig. 1 zeigt eine Verbundscheibe 1 als Bestandteil eines Head-Up-Displays, welche aus einer Innenscheibe 1.1 als erste Scheibe und einer Außenscheibe 1.2 als zweite Scheibe besteht, die über eine mehrlagige Verbundschicht 2, 3, 4 miteinander verbunden sind. Die Verbundscheibe 1 ist als Windschutzscheibe eines Kraftfahrzeugs vorgesehen, welches mit einem Head-Up-Display (HUD) ausgestattet ist. Die Außenscheibe 1.2 ist in Einbaulage der äußeren Umgebung zugewandt, die Innenscheibe 1.1 dem Fahrzeuginnenraum. Die Verbundscheibe 1 weist eine Oberkante auf, die in Einbaulage nach oben zum Fahrzeugdach (Dachkante) angeordnet ist und eine Unterkante, die nach unten zum Motorraum (Motorkante), angeordnet ist.

Weiterhin zeigt Fig. 1 einen Projektor 4 als Bildgeber des HUD Systems, welcher auf einen Teilbereich der Verbundscheibe 1 gerichtet ist. In dem Teilbereich (HUD-Bereich) können durch den Projektor 8 Bilder erzeugt werden, welche von einem Betrachter (Fahrzeugfahrer) als virtuelle Bilder auf der von ihm abgewandten Seite der Verbundscheibe 1 wahrgenommen werden. Der nicht reflektierte Strahlungsanteil, der vom Projektor erzeugten Strahlung, dringt durch die Verbundscheibe 1 hindurch und wird an der Außenseite 1.2.2 der Außenscheibe 1.2. ein zweites Mal reflektiert (Sekundärreflexion). Der Keilwinkel im Teilbereich der Verbundscheibe 1 führt zu gegeneinander geneigten Oberflächen der Außenscheibe 1.2 und der Innenscheibe 1.1 und somit zu einer Überlagerung der Primärreflexion und Sekundärreflexion in einem virtuellen Bild. Folglich sind die an der innenraumseitigen Oberfläche der Windschutzscheibe hervorgerufene Primärreflexion sowie die an der außenseitigen Oberfläche der Windschutzscheibe hervorgerufene Sekundärreflexion nicht mehr getrennt voneinander wahrnehmbar.

Die Außenscheibe 1.2 weist eine außenseitige Oberfläche 1.2.2 auf, die in Einbaulage der äußeren Umgebung zugewandt ist, und eine innenraumseitige Oberseite 1.2.1, die in Einbaulage dem Innenraum zugewandt ist. Ebenso weist die Innenscheibe 1.1 eine Innenseite 1.1.1 auf, die in Einbaulage der äußeren Umgebung zugewandt ist, und eine Außenseite 1.1.2, die in Einbaulage dem Innenraum eines Fahrzeugs zugewandt ist. Die innenraumseitige Oberseite 1.2.1 der Außenscheibe 1.2 ist über die Verbundschicht 2, 3, 4 mit der Innenseite 1.1.1 der Innenscheibe 1.1 verbunden.

Die Verbundschicht 2, 3, 4 besteht zumindest aus einer ersten thermoplastische Folie 2, einer Polyesterfolie 3 und einer zweiten thermoplastische Folie 4. Die erste thermoplastische Folie 2 weist eine Dicke auf, die wesentlich geringer ist als die Dicke der zweiten thermoplastischen Folie 4. Die Dicke der ersten thermoplastischen Folie 2 beträgt beispielhaft ca. 50 µm. Die Dicke der zweiten thermoplastischen Folie 2 beträgt mindestens 760 µm. Zwischen der ersten thermoplastischen Folie und der zweiten thermoplastischen Folie 4 ist die Polyesterfolie 3 angeordnet. Die Polyesterfolie 3 ist ca. 50 µm dick und weist auf ihrer zur ersten thermoplastischen Folie 2 hingewandten Oberfläche eine transparente, elektrisch leitfähige Beschichtung 10 auf.

Die zweite thermoplastische Folie 4 ist dabei in direktem Kontakt mit der Oberseite 1.2.1 der Außenscheibe 1.2. Die zweite thermoplastische Folie 4, die Polyesterfolie 3 und die erste thermoplastische Folie 2 sind flächendeckend übereinander und in der angegebenen Reihenfolge mit wachsendem Abstand zur Außenscheibe 1.2 angeordnet.

Die Dicke der zweiten thermoplastischen Folie 4 nimmt im vertikalen Verlauf von der Unterkante zur Oberkante der Verbundscheibe 1 stetig zu. Die Dickenzunahme ist in der Figur der Einfachheit halber linear dargestellt, kann aber auch komplexere Profile aufweisen. Die zweite thermoplastische Folien 4 ist aus einer einzelnen Folie aus PVB ausgebildet (eine sogenannte Keilfolie mit veränderlicher Dicke). Der Keilwinkel α beträgt zwischen 0,25 mrad bis 0,8 mrad, vorzugsweise zwischen 0,35 mrad bis 0,65 mrad. Bei HUD Systemen mit großer Bildweite wie z. B. einem Augmented-Reality (AR)-HUD System, werden auch Keilwinkel von 0,1 mrad bis 0,3 mrad verwendet. Als AR-HUD System werden HUD Systeme bezeichnet, die mit einer computergestützten Erweiterung der Realitätswahrnehmung eines Nutzers arbeiten.

Für einen Keilwinkel von 0,5 mrad und der Verbundscheibe 1 mit einer Höhe von 1 Meter, also einer durchschnittlichen Höhe einer PKW-Windschutzscheibe, sind das ca. 0,5 mm Dickenänderung (z.B. 0,76 mm an der Unterkante und 1,26 mm an der Oberkante der Verbundscheibe). Eine Aufdickung der Folie hängt neben dem Keilwinkel auch von der Scheibenhöhe ab. Bei einer bevorzugten Glaskombination von Innenscheibe / Außenscheibe von 1,6 mm / 2,1 mm wäre die Gesamtglasdicke 4,46 mm an der Unterkanterkante und 4,96 mm an der Oberkante der Verbundscheibe 1.

Durch die keilförmige Ausbildung der zweiten thermoplastischen Folie 4 werden die beiden virtuellen Bilder, die durch Reflexionen des Projektorbildes an der Außenseite 1.2.2 der Außenscheibe 1.2 (Sekundärreflexion) und Außenseite 1.1.2 der Innenscheibe 1.1 (Primärreflexion) erzeugt werden, miteinander überlagert. Die Sekundärreflexion erscheint daher nicht versetzt zur Primärreflexion, so dass störende Reflexionen vermieden werden können und gleichzeitig die Lichtausbeute und somit die Bildleuchtkraft erhöht wird.

Die Verbundscheibe 1 weist außerdem auf einer Oberfläche der Polyesterfolie 3 die transparente, elektrisch leitfähige Beschichtung 10 auf. Die transparente, elektrisch leitfähige Beschichtung 10 ist IR-reflektierend und dafür vorgesehen, die Aufheizung des Fahrzeuginnenraums durch den IR-Anteil der Sonnenstrahlung zu verringern. Die transparente, elektrisch leitfähige Beschichtung 10 ist beispielsweise ein Dünnschichtstapel enthaltend zwei bis vier Schichten aus Silber und weitere dielektrische Schichten, die als Entspiegelungsschichten, Blockerschichten oder Oberflächenanpassungsschichten die optischen, elektrischen und / oder mechanischen Eigenschaften der Beschichtung optimieren. Die dielektrischen Schichten der transparenten, elektrisch leitfähigen Beschichtung 10 enthalten beispielsweise Siliziumnitrid, Siliziumoxid, Zinkoxid, Zinn-Zink-Oxid und Aluminiumnitrid.

Die transparente, elektrisch leitfähige Beschichtung 10 stellt eine weitere reflektierende Grenzfläche im Inneren der Verbundscheibe 1 dar. Da die erste thermoplastische Folie 2 vergleichsweise zu der zweiten thermoplastischen Folie 4 relativ dünn ausgebildet ist, ist auch der Abstand der transparenten, elektrischen Beschichtung 10 zu der für die Primärreflexion verantwortliche Außenseite 1.1.2 der Innenscheibe 1.1 stark reduziert. Somit überlagert die Schichtreflexion die Primärreflexion und Sekundärreflexion, sodass ein scharfes virtuelles Bild der Head-Up-Displays entsteht.

Die Innenscheibe 1.1 besteht aus Kalk-Natron-Glas und weist nur eine geringe Dicke auf von beispielsweise 1,6 mm. Dadurch wird sichergestellt, dass der räumliche Versatz zwischen Primärreflexion und Schichtreflexion gering ist, und sich die virtuellen Bilder derart überlagern, dass ein scharfes und farbgetreues Korrekturbild im Auge des Betrachters 5 entsteht.

Die Verbundscheibe 1 wurde unter einem Einstrahlwinkel von 60° mit einem HUD-Projektor 8 bestrahlt und der Versatz zwischen Primärbild und Reflexion der Beschichtung an einer typischen Augen-Position (Position der Augen des Fahrers) bestimmt. Die Bildweite des HUD-Systems betrug 2,3 m, wie es für aktuell eingesetzte HUDs typisch ist. Es wurden Messungen mit unterschiedlich dicken Innenscheiben 1.1 durchgeführt. Die Ergebnisse sind in Tabelle 1 zusammengefasst.

**Tabelle 1**

| | | | |
|---|---|---|---|
| **Dicke Innenscheibe 1.1 /mm** | 2,1 | 1,6 | 1,4 |
| **Abstand Primärreflexion - Schichtreflexion / mm** | 2,291 | 1,745 | 1,527 |

Es ist zu erkennen, dass der Versatz mit abnehmender Dicke der Innenscheibe 1.1 geringer wird. Die Erfinder haben weiter festgestellt, dass die Reflexion der Beschichtung 10 bei Reduzierung der Distanz zwischen der der Außenseite 1.1.2 der Innenscheibe 1.1 und der transparenten, elektrisch leitfähigen Beschichtung 10 der Polyesterfolie 3 einem Betrachter kaum auffällt. Durch die Reduzierung dieser Distanz kann die Reflexion der Beschichtung positiv beeinflusst werden. Das virtuelle Bild des Head-Up-Displays wird besonders deutlich und klar dargestellt. Durch die verhältnismäßig dünne Polyesterfolie 3, die eine Dicke von ca. 50 µm aufweist, kann die Reflexion an der Beschichtung 10 gravierend beeinflusst werden, was für den Fachmann unerwartet und überraschend war.

Die Außenscheibe 1.2 besteht ebenfalls aus Kalk-Natron-Glas und weist eine deutlich größere Dicke auf von beispielsweise 2,1 mm. Dadurch wird gewährleistet, dass die Verbundscheibe 1 insgesamt eine ausreichende mechanische Stabilität, Bruchfestigkeit und Verwindungssteifigkeit aufweist.

Die Minimaldicke der Verbundschicht 2, 3, 4 beträgt beispielsweise 0,48 mm (gemessen an der Unterkante U). Die zweite thermoplastische Folie 4 ist hier durch eine einzige, keilförmige PVB-Folie ausgebildet. Es ist aber auch ein mehrschichtiger Aufbau der zweiten thermoplastischen Folie 4 denkbar, wobei zumindest eine Teilfolie als Keilfolie fungiert

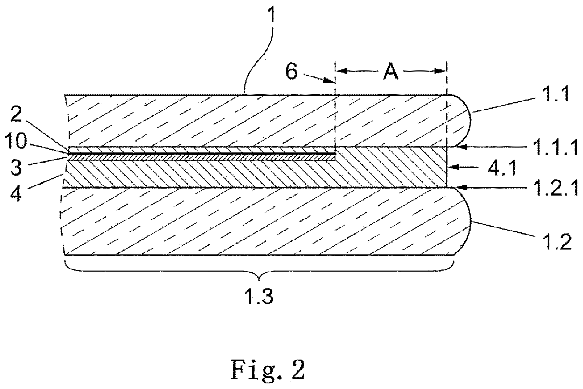

Figur 2 zeigt einen vertikalen Längsschnitt durch einen Randbereich 1.3 der Verbundscheibe 1.

Die Verbundscheibe 1 wurde gebildet durch eine Innenscheibe 1.1 aus gespanntem Floatglas mit einer Dicke von 2,1 mm. Die Kanten der Innenscheibe 1.1 waren abgerundet. Die Innenscheibe 1.1 wies eine Innenseite 1.1.1 auf, die der mehrlagigen Verbundschicht 2, 3, 4 zugeordnet war.

Außerdem wurde die Verbundscheibe 1 durch eine Außenscheibe 1.2 derselben Zusammensetzung und Abmessungen gebildet. Die Außenscheibe 1.2 hat vorzugsweise im Bereich nahe der Glaskante auf der Innenseite 1.2.1 einen Schwarzdruck, um den Rückschnitt zu kaschieren. Die Innenscheibe 1.1 kann beispielsweise zur einfacheren Spezifikation von Klebesystemen auch auf Seite 1.1.2 ein Schwarzdruck aufweisen. Zudem ist die Außenscheibe 1.2 häufig bis zu 5 mm größer als die Innenscheibe 1.1.Die Kanten der Außenscheibe 1.2 waren ebenfalls abgerundet. Die Außenscheibe 1.2 wies eine Oberseite 1.2.1 auf, die der mehrlagigen Verbundschicht 2, 3, 4 zugeordnet war.

Die Innenseite 1.1.1 der Innenscheibe 1.1 stand in direktem Kontakt mit einer 50 µm dicken, weichmacherfreien PVB-Folie 2. Diese war unterlegt mit einer 50 µm dicken PET-Folie 3. Die PVB-Folie 2 und die PET-Folie 3 wiesen eine gemeinsame Kante 6 auf, die sich in einem Abstand A = 1 cm von dem Rand 4.1 der unterlegten 760 µm dicken PVB-Folie 4 befand. Die PVB-Folie 4 lag der Oberseite 1.2.1 der Außenscheibe 1.2 auf. Das Material der PVB-Folie 4 füllte den Raum zwischen der Kante 6 und der Innenseite 1.1.1 der Innenscheibe 1.1 auf dem Abstand A vollständig aus. Dadurch war die gemeinsame Kante 6 der PVB-Folie 2 und der PET-Folie 3 vollständig von der Umgebung der Verbundscheibe 1 isoliert, sodass die transparente, elektrisch leitfähige Beschichtung 10 aufweisende PET-Folie 3 keine Korrosionsschäden aufwies. Die Verbundschicht 2, 3, 4 war trotz ihrer Laminierung in ihrer Funktion nicht mehr beeinträchtigt. Außerdem zeigte die PVB-PET-PVB-Verbundschicht 2, 3, 4 keine Orangenhaut und Innenfehler auf. Darüber hinaus war es möglich, die PET-Folie 3 beim Laminieren durch die verhältnismäßig dünne zweite thermoplastische Folie 2 zu schützen. Des Weiteren konnte die Trennung der ersten thermoplastischen Folie 2 und Polyesterfolie 3 sehr gut von der zweiten thermoplastischen Folie 4 im Herstellungsverfahren vollzogen werden. Ein Rückschnitt der ersten thermoplastischen Folie 2 und Polyesterfolie 3 war problemlos zu realisieren und führte so zu keinen sichtbaren Störungen. Insbesondere konnte ein, dem Fachmann bekannter Schichtübertrag von der PET-Folie 3 vermieden werden, da die berührende PVB Folie 2 gleichzeitig entfernt wurde.

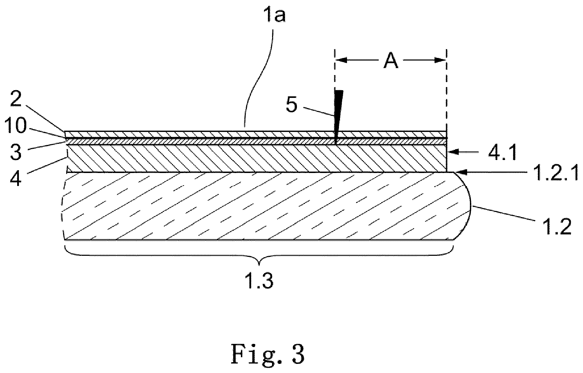

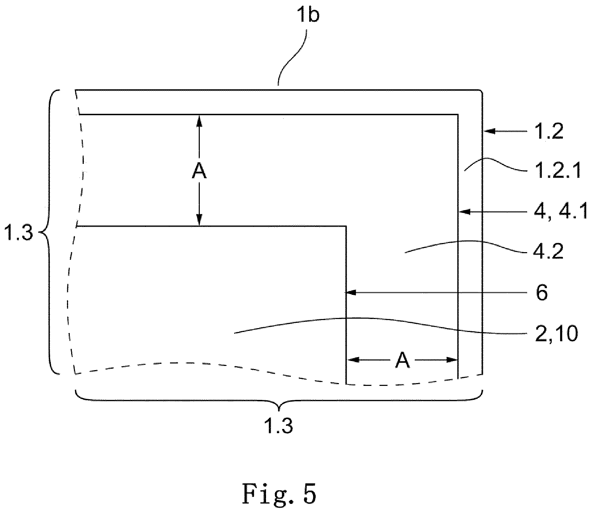

Fig. 3 bis 6 zeigen schematisch eine Herstellung der Verbundscheibe 1 anhand von vertikalen Längsschnitten der Randbereiche 1.3. Die Figur 5 zeigt zur Verdeutlichung des Verfahrens die Draufsicht auf die Zwischenstufe 1b bei der Herstellung der Verbundscheibe 1. Es wurden die bei Fig. 2 näher erläuterten Materialien und Abmessungen verwendet.

Fig. 3 verdeutlicht die Zwischenstufe 1a des Herstellungsverfahrens. Auf die Oberseite 1.2.1 der Außenscheibe 1.2 wurde die zweite thermoplastische (PVB) Folie 4 laminiert. Anschließend wurden auf die freie Oberseite der zweiten thermoplastischen (PVB) Folie 4 die Polyester (PET)-Folie 3 und die erste thermoplastische (PVB) Folie 2 laminiert, so dass die Zwischenstufe 1a resultierte.

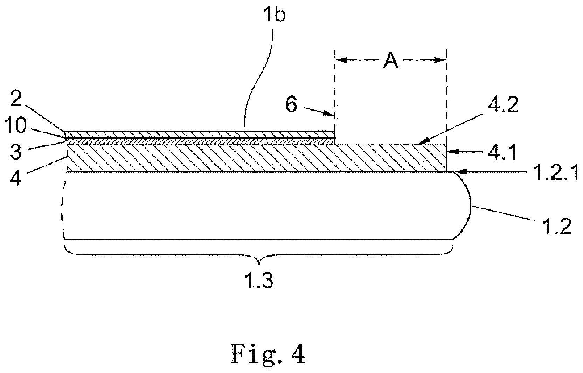

Fig. 4 verdeutlicht die Zwischenstufe 1b des Herstellungsverfahrens. Zur Herstellung der Zwischenstufe 1b wurde die Zwischenstufe 1a mit einem Diamantmesser 5 (in Fig. 3 gezeigt) in dem Abstand Azur Kante 4.1 der zweiten thermoplastischen (PVB) Folie 4 bis zur Oberfläche der zweiten thermoplastischen (PVB) Folie 4 eingeschnitten. Das abgeschnittene PVB-PET-Folienstück der ersten thermoplastischen Folie 2 und der Polyesterfolie 3 wurde entfernt, ohne dass die nun freigelegte, freie, horizontale Oberfläche 4.2 der zweiten thermoplastischen (PVB) Folie 4 beschädigt wurde. Die erste thermoplastische (PVB) Folie 2 und die Polyester (PET)-Folie 3 bildeten nun eine gemeinsame Kante 6 im Abstand A zur Kante 4.1 der zweiten thermoplastischen (PVB) Folie 4.

Diese Anordnung wird noch einmal anhand der Figur 5 veranschaulicht.

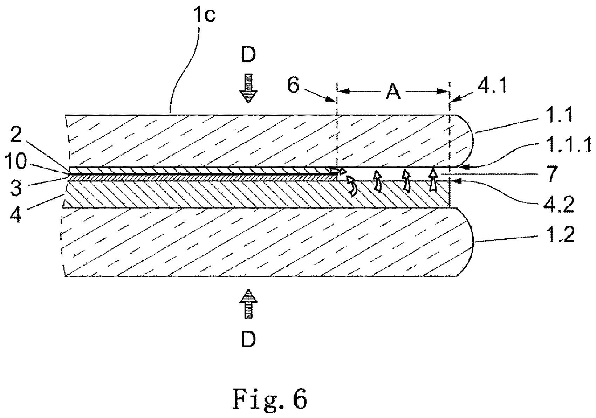

Die Fig. 6 verdeutlicht die Zwischenstufe 1c. Auf die Anordnung der Zwischenstufe 1b gemäß den Figuren 4 und 5 wurde die Innenscheibe 1.1 mit der Innenseite 1.1.1 aufgelegt, so dass sie in Kontakt mit der ersten thermoplastischen (PVB) Folie 2 kam. Anschließend wurde die gesamte Anordnung in der Hitze und unter Vakuum mit dem Druck D in einem Vakuumsack zusammengepresst. Dabei füllte sich der Hohlraum zwischen der gemeinsamen Kante 6, der freien Oberfläche 4.2 und der Innenseite 1.1.1 der Innenscheibe 1.1 auf, indem das Material der zweiten thermoplastischen (PVB) Folie 4 in der Fließrichtung 7 in den Hohlraum floss und mit dem Material der ersten thermoplastischen (PVB) Folie 2 verschmolz. Nach dem Abkühlen, der Entspannung des Drucks D und dem Einlassen von Luft in den Vakuumsack resultierte die Verbundscheibe 1.

### Bezugszeichenliste:

- 1: Verbundscheibe
- 1a, 1b, 1c: Zwischenstufen bei der Herstellung der Verbundscheibe 1
- 1.1: Innenscheibe der Verbundscheibe 1
- 1.1.1: Innenseite der Innenscheibe 1.1
- 1.2: Außenscheibe der Verbundscheibe 1
- 1.2.1: Oberseite der Außenscheibe 1.2
- 1.3: Randbereich der Verbundscheibe 1
- 2: erste (dünne) thermoplastische Folie
- 3: Polyesterfolie
- 4: zweite (dicke) thermoplastische (Keil-)Folie
- 4.1: Rand der zweiten thermoplastischen Folie 4
- 4.2: freie horizontale Oberfläche der zweiten thermoplastischen Folie 4
- 5: Schneidevorrichtung
- 6: gemeinsamer Rand der ersten thermoplastischen Folie 2 und der Polyesterfolie 3
- 7: Fließrichtung des Materials der thermoplastischen Folie 4
- 8: Projektor
- 9: Auge des Betrachters
- 10: transparente, elektrisch leitfähige Beschichtung
- A: Abstand des gemeinsamen Randes 6 von dem Rand 4.1 der zweiten thermoplastischen Folie 4
- D: Anpressdruck

## Patentansprüche

1. Verbundscheibe (1) für ein Head-Up-Display, mindestens umfassend eine erste Scheibe (1.1) und eine zweite Scheibe (1.2), die über eine Verbundschicht (2, 3, 4) miteinander verbunden sind, sowie eine transparente, elektrisch leitfähige Beschichtung (10), wobei die Verbundschicht (2, 3, 4) eine erste thermoplastische Folie (2), eine Polyesterfolie (3) und eine zweite thermoplastische Folie (4) mit einem Verhältnis der Dicken der zweiten thermoplastischen Folie zu der ersten thermoplastischen Folie von 1,5:1 bis 20:1 aufweist, wobei die erste thermoplastische Folie (2) und die Polyesterfolie (3) eine gemeinsame Kante (6) aufweisen, die zumindest teilweise im Abstand (A) zu einem Rand (4.1) der zweiten thermoplastischen Folie (4) beabstandet ist und wobei die erste thermoplastische Folie (2) eine Dicke von 40 µm bis 110 µm aufweist, wobei die transparente, elektrisch leitfähige Beschichtung (10) zumindest teilweise an einer Oberfläche der Polyesterfolie (3) angeordnet ist, und wobei die zweite thermoplastische Folie (4) einen Keilwinkel aufweist, und wobei ein kapazitiver Schaltbereich durch mindestens eine beschichtungsfreie Trennlinie aus der transparenten, elektrisch leitfähigen Beschichtung (10) abgetrennt ist.

2. Verbundscheibe (1) nach Anspruch 1, **dadurch gekennzeichnet, dass** der Keilwinkel (α) von 0,2 mrad bis 1 mrad beträgt, bevorzugt von 0,3 mrad bis 0,7 mrad, besonders bevorzugt von 0,4 mrad bis 0,5 mrad.

3. Verbundscheibe (1) nach einem der Ansprüche 1 bis 2, **dadurch gekennzeichnet, dass** die zweite thermoplastische Folie (4) zur Absorption von Infrarot- und / oder Ultraviolettstrahlung vorgesehen ist.

4. Verbundscheibe (1) nach Anspruch 1 bis 3, **dadurch gekennzeichnet, dass** die zweite thermoplastische Folie (4) zumindest teilweise schalldämpfend ausgebildet ist.

5. Verbundscheibe (1) nach einem der Ansprüche 1 bis 4, **dadurch gekennzeichnet, dass** die transparente, elektrische Beschichtung (10) zum Beheizen der Verbundscheibe (1), zur Reflexion von Wärmestrahlung und / oder zum Senden und Empfangen von Funkstrahlung vorgesehen ist.

6. Verbundscheibe nach einem der Ansprüche 1 bis 5, **dadurch gekennzeichnet, dass** die Polyesterfolie (4) eine Polyethylenterephthalatfolie (PET) ist.

7. Verbundscheibe (1) nach einem der Ansprüche 1 bis 6, **dadurch gekennzeichnet, dass** die erste thermoplastische Folie (2) und / oder die zweite thermoplastische Folie (4) einen Kunststoff aufweisen, ausgewählt aus der Gruppe, bestehend aus Polyvinylbutyral (PVB), Ethylenvinylacetat (EVA), Polyurethan (PU), Polypropylen (PP), Polyacrylat, Polyethylen (PE), Polycarbonat (PC), Polymethylmethacrylat (PMMA), Polyvinylchlorid (PVC), Polyacetatharz, Gießharzen, Polyacrylaten, fluorierten Ethylen-Propylen-Copolymerisaten, Polyvinylfluorid und / oder Ethylen-Tetrafluorethylen-Copolymerisaten.

8. Verbundscheibe (1) nach einem der Ansprüche 1 bis 7, **dadurch gekennzeichnet, dass** die erste thermoplastische Folie (2) frei von Weichmachern ist.

9. Verwendung einer Verbundscheibe (1) nach einem der Ansprüche 1 bis 8 in einem Kraftfahrzeug, bevorzugt einem Personenkraftwagen.

10. Verfahren zur Herstellung einer Verbundscheibe (1) gemäß einem der Ansprüche 1 bis 8 umfassend die folgenden Verfahrensschritte:
(a) Bereitstellen mindestens einer Scheibe (1.2) mit einer Oberseite (1.2.1),
(b) Bedecken der Oberseite (1.2.1) mit einer thermoplastischen Folie (4) bis zum Randbereich der Scheibe (1.2),
(c) vollständiges Bedecken der der Oberseite (1.2.1) gegenüberliegenden Oberfläche der thermoplastischen Folie (4) mit mindestens einer Polyesterfolie (3),
(d) vollständiges Bedecken der freien Oberfläche der Polyesterfolie (3) mit mindestens einer weiteren thermoplastischen Folie (2),
(e) vertikales Einschneiden der Polyesterfolie (3) und der weiteren thermoplastischen Folie (2) mit einer Schneidevorrichtung (5) im Abstand zum Rand (4.1) der thermoplastischen Folie (4),
(f) Entfernen eines Folienstreifens (2,3), so dass die weitere thermoplastische Folie (2) und die Polyesterfolie (3) eine gemeinsame Kante (6) bilden und eine freie horizontale Oberfläche (4.2) der thermoplastischen Folie (4) freigelegt wird, und
(g) Aufpressen einer weiteren Scheibe (1.1) mit einem Druck, wobei eine Innenseite (1.1.1) der weiteren Scheibe (1.1) mit der Oberseite der weiteren thermoplastischen Folie (2) in Kontakt kommt und wobei ein freier Raum zwischen der Kante (6), der Innenseite (1.1.1) und der Oberfläche (4.2) durch Einfließen eines Materials von mindestens einer der thermoplastischen Folien (2, 4) aufgefüllt wird.

## Claims

1. Composite pane (1) for a head-up display, at least comprising a first pane (1.1) and a second pane (1.2) that are joined to one another via a composite layer (2, 3, 4) as well as a transparent, electrically conductive coating (10), wherein the composite layer (2, 3, 4) has a first thermoplastic film (2), a polyester film (3), and a second thermoplastic film (4) having a ratio of the thicknesses of the second thermoplastic film to the first thermoplastic film of 1.5:1 to 20:1, wherein the first thermoplastic film (2) and the polyester film (3) have a common edge (6) that is at least partially spaced at a distance (A) from an edge (4.1) of the second thermoplastic film (4), and wherein the first thermoplastic film (2) has a thickness of 40 µm to 110 µm, wherein the transparent, electrically conductive coating (10) is arranged at least partially on a surface of the polyester film (3), and wherein the second thermoplastic film (4) has a wedge angle, und wherein a capacitive switching region is separated by at least one coating-free separating line out of the transparent, electrically conductive coating (10).

2. Composite pane (1) according to claim 1, **characterized in that** the wedge angle (α) is from 0.2 mrad to 1 mrad, preferably from 0.3 mrad to 0.7 mrad, particularly preferably from 0.4 mrad to 0.5 mrad.

3. Composite pane (1) according to one of claims 1 through 2, **characterized in that** the second thermoplastic film (4) is provided for absorbing infrared and/or ultraviolet radiation.

4. Composite pane (1) according to claim 1 through 3, **characterized in that** the second thermoplastic film (4) is implemented at least partially sound damping.

5. Composite pane (1) according to one of claims 1 through 4, **characterized in that** the transparent, electrical coating (10) is provided for heating the composite pane (1), for reflecting thermal radiation, and/or for transmitting and receiving radio radiation.

6. Composite pane according to one of claims 1 through 5, **characterized in that** the polyester film (4) is a polyethylene terephthalate film (PET).

7. Composite pane (1) according to one of claims 1 through 6, **characterized in that** the first thermoplastic film (2) and/or the second thermoplastic film (4) comprises a plastic selected from the group consisting of polyvinyl butyral (PVB), ethylene vinyl acetate (EVA), polyurethane (PU), polypropylene (PP), polyacrylate, polyethylene (PE), polycarbonate (PC), polymethyl methacrylate (PMMA), polyvinyl chloride (PVC), polyacetate resin, casting resins, polyacrylates, fluorinated ethylene-propylene copolymers, polyvinyl fluoride, and / or ethylene-tetrafluoroethylene copolymers.

8. Composite pane (1) according to one of claims 1 through 7, **characterized in that** the first thermoplastic film (2) is free of plasticizers.

9. Use of a composite pane (1) according to one of claims 1 through 8 in a motor vehicle, preferably a passenger car.

10. Method for producing a composite pane (1) according to one of claims 1 through 8, comprising the following steps:
(a) providing of at least one pane (1.2) having a top side (1.2.1),
(b) covering the top side (1.2.1) with a thermoplastic film (4) all the way to the edge region of the pane (1.2),
(c) complete covering of the surface of the thermoplastic film (4) opposite the top side (1.2.1) with at least one polyester film (3),
(d) complete covering of the free surface of the polyester film (3) with at least one additional thermoplastic film (2),
(e) vertical cutting of the polyester film (3) and the additional thermoplastic film (2) using a cutting device (5) at a distance from the edge (4.1) of the thermoplastic film (4),
(f) removing of a film strip (2,3) such that the additional thermoplastic film (2) and the polyester film (3) form a common edge (6) and a free horizontal surface (4.2) of the thermoplastic film (4) is exposed, and
(g) pressing on of an additional pane (1.1) using pressure, wherein an inner side (1.1.1) of the additional pane (1.1) makes contact with the top side of the additional thermoplastic film (2) and wherein a free space between the edge (6), the inner side (1.1.1), and the surface (4.2) is filled by the influx of a material of at least one of the thermoplastic films (2, 4).

## Revendications

1. Vitre composite (1) pour un affichage tête haute, comprenant au moins une première vitre (1.1) et une deuxième vitre (1.2) qui sont reliées l'une à l'autre par une couche composite (2, 3, 4) ainsi qu'un revêtement transparent et conducteur d'électricité (10), dans lequel la couche composite (2, 3, 4) a un premier film thermoplastique (2), un film polyester (3), et un deuxième film thermoplastique (4) ayant un rapport des épaisseurs du deuxième film thermoplastique par rapport au premier film thermoplastique de 1,5:1 à 20:1, dans lequel le premier film thermoplastique (2) et le film polyester (3) ont un bord commun (6) qui est au moins partiellement espacé à une distance (A) d'un bord (4.1) du second film thermoplastique (4), et dans lequel le premier film thermoplastique (2) a une épaisseur de 40 µm à 110 µm, dans lequel le revêtement transparent et électriquement conducteur (10) est disposé au moins partiellement sur une surface du film polyester (3), et dans lequel le second film thermoplastique (4) a un angle de coin, et dans lequel une zone de commutation capacitive est séparée par au moins une ligne de séparation sans revêtement du revêtement transparent et électriquement conducteur (10).

2. Vitre composite (1) selon la revendication 1, **caractérisée par le fait que** l'angle de coin (α) est compris entre 0,2 mrad et 1 mrad, de préférence entre 0,3 mrad et 0,7 mrad, de préférence encore entre 0,4 mrad et 0,5 mrad.

3. Vitre composite (1) selon l'une des revendications 1 à 2, **caractérisé en ce que** le deuxième film thermoplastique (4) est prévu pour absorber les rayonnements infrarouges et/ou ultraviolets.

4. Vitre composite (1) selon l'une des revendications 1 à 3, **caractérisée par le fait que** le second film thermoplastique (4) est mis en oeuvre au moins partiellement pour l'amortissement du son.

5. Vitre composite (1) selon l'une des revendications 1 à 4, **caractérisée par le fait que** le revêtement électrique transparent (10) est prévu pour chauffer la vitre composite (1), pour réfléchir le rayonnement thermique et/ou pour transmettre et recevoir le rayonnement radio.

6. Vitre composite selon l'une des revendications 1 à 5, **caractérisé par le fait que** le film polyester (4) est un film polyéthylène téréphtalate (PET).

7. Vitre composite (1) selon l'une des revendications 1 à 6, **caractérisée par le fait que** le premier film thermoplastique (2) et/ou le second film thermoplastique (4) comprend une matière plastique choisie dans le groupe constitué par le butyral de polyvinyle (PVB), l'éthylène-acétate de vinyle (EVA), le polyuréthane (PU), polypropylène (PP), polyacrylate, polyéthylène (PE), polycarbonate (PC), polyméthacrylate de méthyle (PMMA), chlorure de polyvinyle (PVC), résine de polyacétate, résines de coulée, polyacrylates, copolymères fluorés d'éthylène et de propylène, fluorure de polyvinyle et/ou copolymères d'éthylène et de tétrafluoroéthylène.

8. Vitre composite (1) selon l'une des revendications 1 à 7, **caractérisé par le fait que** le premier film thermoplastique (2) est exempt de plastifiants.

9. Utilisation d'une vitre composite (1) selon l'une des revendications 1 à 8 dans un véhicule automobile, de préférence une voiture particulière.

10. Procédé de fabrication d'une vitre composite (1) selon l'une des revendications 1 à 8, comprenant les étapes suivantes :
(a) fournir au moins une vitre (1.2) ayant une face supérieure (1.2.1),
(b) recouvrir la face supérieure (1.2.1) d'un film thermoplastique (4) jusqu'à la zone du bord de la vitre (1.2),
(c) recouvrement complet de la surface du film thermoplastique (4) opposée à la face supérieure (1.2.1) avec au moins un film polyester (3),
(d) recouvrement complet de la surface libre du film polyester (3) par au moins un autre film thermoplastique (2),
(e) découpe verticale du film polyester (3) et du film thermoplastique supplémentaire (2) à l'aide d'un dispositif de découpe (5) à une certaine distance du bord (4.1) du film thermoplastique (4),
(f) retrait d'une bande de film (2,3) de manière à ce que le film thermoplastique supplémentaire (2) et le film polyester (3) forment un bord commun (6) et qu'une surface horizontale libre (4.2) du film thermoplastique (4) soit exposée, et
(g) l'application par pression d'une vitre supplémentaire (1.1), dans laquelle une face intérieure (1.1.1) de la vitre supplémentaire (1.1) entre en contact avec la face supérieure du film thermoplastique supplémentaire (2) et dans laquelle un espace libre entre le bord (6), la face intérieure (1.1.1) et la surface (4.2) est rempli par l'afflux d'un matériau d'au moins l'un des films thermoplastiques (2, 4).
